# EUROPÄISCHE PATENTSCHRIFT

(11) **EP 2 475 904 B1**
(45) Veröffentlichungstag und Bekanntmachung des Hinweises auf die Patenterteilung: **04.06.2014**
(21) Anmeldenummer: 10737863.0
(22) Anmeldetag: 22.07.2010
(51) Int. Cl.: F16D 1/08, F04C 15/00

(54) **PRESSVERBUND EINER WELLE MIT EINEM DARAUF GEPRESSTEN ANTRIEBSELEMENT ODER ABTRIEBSELEMENT**
PRESSFIT CONNECTION OF A SHAFT TO A DRIVE ELEMENT OR DRIVEN ELEMENT PRESSED THEREON
LIAISON PAR SERRAGE D'UN ARBRE ET D'UN ÉLÉMENT D'ENTRAÎNEMENT OU DE SORTIE SERRÉ SUR CELUI-CI

(30) Priorität: 09.09.2009 DE 102009029296
(43) Veröffentlichungstag der Anmeldung: 18.07.2012
(73) Patentinhaber: Robert Bosch GmbH, 70442 Stuttgart (DE)
(72) Erfinder: FRANK, Josef, A-5423 St. Koloman (AT); FUCHS, Alexander, A-5421 Adnet (AT); ORTNER, Klaus, A-5020 Salzburg (AT)
(86) Internationale Anmeldenummer: PCT/EP2010/060636
(87) Internationale Veröffentlichungsnummer: WO 2011/029656

(56) Entgegenhaltungen:
- EP-A1- 0 987 081
- EP-A1- 1 544 487
- EP-A2- 0 845 614
- WO-A1-2007/014537
- DE-C1- 19 736 333

## Beschreibung

### Stand der Technik

Die Erfindung betrifft einen Pressverbund nach dem Oberbegriff des Anspruchs 1.

Vom Markt her bekannt sind Zahnradförderpumpen, bei denen ein Antriebszahnrad axial von einer Welle angetrieben wird. Die bekannten Zahnradförderpumpen werden beispielsweise als Kraftstoff-Förderpumpen zum Fördern von Dieselkraftstoff, Benzin oder Sonderkraftstoffen eingesetzt. Die Kraftübertragung von der Welle auf das Antriebszahnrad erfolgt entweder formschlüssig oder kraftschlüssig. Für eine formschlüssige Verbindung wird beispielsweise ein Kupplungselement verwendet, welches eine Verbindung von der Welle zum Antriebszahnrad schafft. Bei einer kraftschlüssigen Verbindung wird hingegen das Antriebszahnrad auf die Welle aufgepresst. Im nicht gepressten Zustand ist der Außenradius der Welle um ein bestimmtes Maß größer als der Innenradius des aufzupressenden Zahnrads. Die Welle ist dabei als ein massiver Körper ausgeführt und besitzt im Verhältnis zum Zahnrad eine vergleichsweise geringe Elastizität in radialer Richtung. Eine solche Pressung oder Aufschrumpfung dehnt daher das Antriebszahnrad stärker als die Welle.

WO 2007/014537 A1 offenbart ein Getriebe mit zwei Drehmoment übertragenen Wellen, wobei ein Bereich der Wellen rohrförmig ausgebildet sein kann.

EP 0 987 081 A1 offenbart ein Montageverfahren für ein Rad und eine Welle, wobei die Welle an der Fügestelle hohl sein kann.

EP 0 845 614 A2 offenbart eine Polygonverbindung einer Nabe mit einer Welle, wobei die Welle als Rohr- und als Massivwelle ausgeführt sein kann.

### Offenbarung der Erfindung

Die Aufgabe der Erfindung ist es, einen Pressverbund von einer Welle und einem Antriebs- oder Abtriebselement zu verbessern.

Diese Aufgabe wird durch einen Pressverbund nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Durch die Erfindung werden die Dehnungen und die daraus folgend möglichen Deformationen gleichmäßiger zwischen der Welle und dem darauf gepressten Antriebs- oder Abtriebselement aufgeteilt. Bei vergleichbaren Toleranzen der Welle und des Antriebs- oder Abtriebselements vor der Pressung wird - in Bezug auf eine nach dem Stand der Technik ausgeführte Anordnung - durch die erfindungsgemäße Lösung eine axiale und radiale Deformation des Antriebs- oder Abtriebselementes geringer. Daraus ergibt sich ebenfalls ein vermindertes axiales und radiales Spiel. Insbesondere wenn das Antriebs- oder Abtriebselement ein Zahnrad einer Zahnradpumpe ist, lassen sich Leckageverluste verringern und der Wirkungsgrad der Zahnradpumpe steigern. Dies wirkt sich auch beim Anlauf einer Zahnradpumpe vorteilhaft aus. Außerdem wird es möglich, bei einer gegenüber dem Stand der Technik vergleichbaren Geometrie des Antriebs- oder Abtriebselements (Nabe) ein größeres Drehmoment zu übertragen, oder alternativ bei gleichen Anforderungen an das Drehmoment die Nabe schwächer auszulegen. Auf diese Weise wird der Pressverbund von einer Welle und einem Antriebs- oder Abtriebselement wesentlich verbessert.

Grundlage der Erfindung ist, dass die Elastizität der Welle in einer radialen Richtung erhöht wird. Das wird erreicht, indem die Welle mindestens in jenem axialen Längenbereich, in dem das Antriebs- oder Abtriebselement auf die Welle gepresst ist (Pressbereich), wenigstens bereichsweise eine sich axial erstreckende Ausnehmung aufweist, durch die sie dort als Hohlwelle ausgebildet ist.

Besonders einfach ist die Erfindung anzuwenden, wenn der Pressbereich ein axialer Endbereich der Welle ist, und wenn die Ausnehmung sacklochartig ist. Eine solche sacklochartige Ausnehmung kann sehr leicht eingebracht werden, beispielsweise in Form einer Sackbohrung. Dabei kann die Erfindung bei vielen Anwendungen eingesetzt werden, da bei vielen Anwendungen das Antriebs- oder Abtriebselement am Ende der Welle aufgepresst ist. Beispielsweise sind Zahnradpumpen dadurch einfacher aufzubauen.

Weiterhin wird vorgeschlagen, dass die Welle insgesamt eine Hohlwelle ist. Durch eine Ausgestaltung insgesamt als Hohlwelle wird Gewicht gespart. Dies ist vor allem bei solchen Anwendungen vorteilhaft, in denen nur ein vergleichsweise geringes Drehmoment von dem Antriebs- oder Abtriebselement übertragen werden muss. Außerdem ist ein zusätzlicher Arbeitsschritt zum Einbringen der Ausnehmung nicht erforderlich.

Erfindungsgemäß weist die Welle im Bereich des Antriebs- oder Abtriebselements ein Radiallager auf, welches sich über einen Teil der axialen Erstreckung des Antriebs- oder Abtriebselements und zwischen Antriebs- oder Abtriebselement und Welle erstreckt. Durch die Erfindung können sowohl das Axialspiel als auch das Radialspiel des Antriebs- oder Abtriebselements gegenüber einem umgebenden Gehäuse reduziert werden. Hierdurch kann beispielsweise beim Einsatz in einer Zahnradförderpumpe deren Wirkungsgrad erhöht werden. Grund ist, dass eine durch das Aufpressen auf die Welle und die wegen des Radiallagers verminderte Presslänge hervorgerufene Deformation einer Nabe des Antriebs- oder Abtriebselements aus seiner Ebene heraus erfindungsgemäß reduziert oder sogar ganz eliminiert wird. Auch kann das Radiallager günstig in Bezug auf die durch das Antriebs- oder Abtriebselement stattfindende Kraftübertragung platziert werden, und das Radiallager wird weniger von axial wirkenden Kräften beansprucht.

Ergänzend wird vorgeschlagen, dass das Antriebs- oder Abtriebselement ein Zahnrad ist. Durch die Erfindung wird die Belastung der Nabe des Zahnrads und somit auch deren Verformung reduziert. Dies ermöglicht es, dass das Zahnrad optimal arbeitet.

Ein besonders nützlicher Anwendungsfall der Erfindung liegt vor, wenn das Antriebs- oder Abtriebselement ein Zahnrad einer Zahnradpumpe ist. Zumeist übertragen die Zahnräder einer Zahnradpumpe ein - im Vergleich zu Getrieben - geringeres Drehmoment. Dadurch ist es leichter möglich, die Welle als eine Hohlwelle auszubilden oder mit einer sacklochartigen Bohrung zu versehen, ohne die Dauerfestigkeit des Antriebs wesentlich zu verändern. Weiterhin ist bei Zahnradpumpen ein möglichst kleines axiales und radiales Spiel der Zahnräder gefordert, um die Leckageverluste niedrig zu halten und den Wirkungsgrad der Zahnradpumpe zu erhöhen. Daher kommt im Pressverbund von Welle und Zahnrad der gleichmäßigeren Aufteilung der Dehnungen zwischen Welle und Zahnrad eine große Bedeutung zu.

Nachfolgend werden beispielhafte Ausführungsformen der Erfindung unter Bezugnahme auf die Zeichnung erläutert. In der Zeichnung zeigen:
- Figur 1: ein Verspannungsschaubild einer Wellen-Naben-Verbindung;
- Figur 2: eine erste Ausführung eines Pressverbundes von einer Welle und einem Zahnrad; und
- Figur 3: eine zweite Ausführung eines Pressverbundes von einer Welle und einem Zahnrad.

Es werden in allen Figuren auch bei unterschiedlichen Ausführungsformen für funktionsäquivalente Elemente und Größen die gleichen Bezugszeichen verwendet.

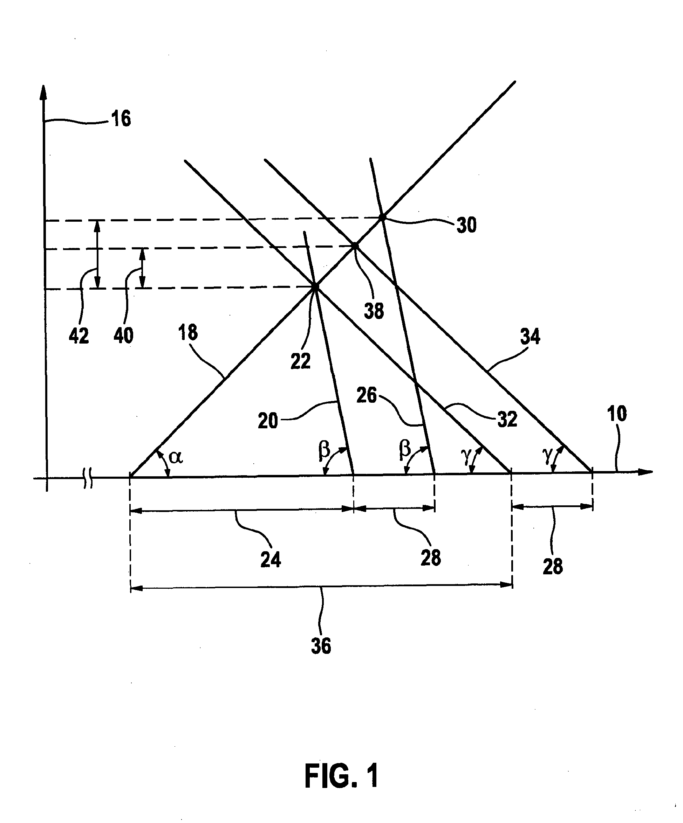

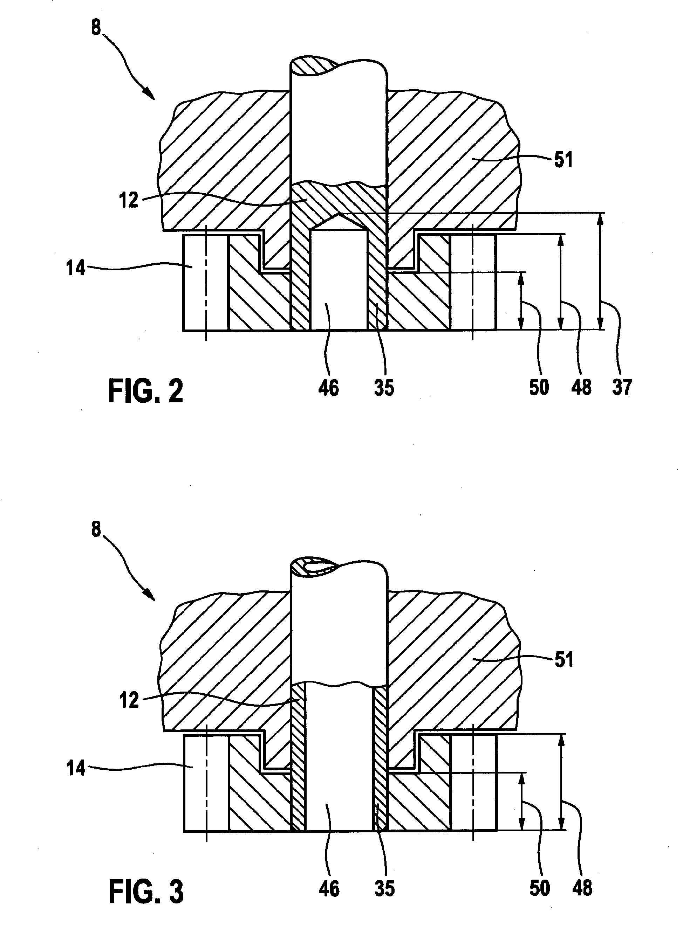

Figur 1 zeigt ein Verspannungsschaubild eines Pressverbunds 8 einer Wellen-Naben-Verbindung. Auf einer waagerechten Achse 10 ist eine radiale Dehnung einer in Figur 2 gezeigten Welle 12 und eines Antriebselementes 14 eingetragen. Nachfolgend wird das Antriebselement 14 als ein Zahnrad 14 beschrieben. Auf einer dazu senkrechten Achse 16 ist eine radiale Pressung der Welle 12 und des Zahnrads 14 eingetragen.

In Figur 1 von links nach rechts ansteigend ist im linken Teil des Schaubilds eine Gerade 18 eingezeichnet, welche den Zusammenhang von Dehnung und Pressung eines Zahnrads 14 zeigt. Die Gerade 18 weist gegenüber der waagerechten Achse 10 einen Winkel α auf. Je stärker das Zahnrad 14 radial gedehnt wird, um so größer ist die auftretende Pressung und sind folglich die im Zahnrad 14 auftretenden Kräfte und Spannungen. Zur Herstellung eines festen Bezugs wird in der Figur 1 das Zahnrad 14 mit konstanten Eigenschaften angenommen. Insbesondere werden mögliche mechanische Toleranzen allein der Welle 12 zugerechnet.

In Figur 1 von links nach rechts abfallend ist weiter rechts eine Gerade 20 eingezeichnet, welche den Zusammenhang von Dehnung und Pressung der Welle 12 zeigt. Die Gerade 20 weist gegenüber der waagerechten Achse 10 einen Winkel β auf. Je stärker die Welle 12 radial gestaucht wird, um so größer ist die auftretende Pressung und sind folglich die in der Welle 12 auftretenden Kräfte und Spannungen.

Im Verbund erleiden die Welle 12 und das Zahnrad 14 eine gleiche Pressung, so dass der Schnittpunkt 22 der Geraden 18 mit der Geraden 20 die Höhe dieser Pressung und ebenso das gemeinsame Endmaß charakterisiert. Der Schnittpunkt 22 stellt in der Figur 1 eine minimale nötige Pressung zwischen der Welle 12 und dem Zahnrad 14 dar. Ein Abstand 24 gibt ein dafür nötiges radiales Differenzmaß der Welle 12 und des Zahnrads 14 an, und entsprechend ist vor einer Verpressung ein Außenradius der Welle 12 größer als ein Innenradius des Zahnrads 14.

Das radiale Differenzmaß der Welle 12 und des Zahnrads 14 kann einen herstellbedingten Toleranzbereich 28 aufweisen. Für einen positiven Grenzfall zeigt eine in der Zeichnung von links nach rechts abfallende Gerade 26 den zugehörigen Zusammenhang von Dehnung und Pressung der Welle 12 auf. Die Gerade 26 weist gegenüber der waagerechten Achse 10 ebenfalls einen Winkel β auf. Die Gerade 26 verläuft parallel zur Geraden 20. Im Verbund von Welle 12 und Zahnrad 14 ergibt sich damit ein neuer Schnittpunkt 30 für die entstehende höhere Pressung.

Die ebenfalls zueinander parallelen Geraden 32 und 34 in Figur 1 rechts beschreiben den Zusammenhang von Dehnung und Pressung der in Figur 2 gezeigten Welle 12, welche in einem Endbereich 35 und über einen Längenbereich 37, der etwas größer ist als ein Längenbereich 50, in dem das Zahnrad 14 auf die Welle 12 aufgepresst ist (Pressbereich oder Presslänge 50), eine Ausnehmung 46 in Form einer sacklochartigen Bohrung aufweist. Die Welle 12 ist in diesem Bereich also als Hohlwelle ausgebildet. Die Geraden 32 und 34 weisen gegenüber der waagerechten Achse einen Winkel γ auf. Die Geraden 32 und 34 verlaufen flacher als die Geraden 20 und 26 aufgrund einer durch die Bohrung 46 erhöhten radialen Elastizität der Welle 12. Die Gerade 32 ist in Bezug auf einen das radiale Differenzmaß der Welle 12 und des Zahnrads 14 charakterisierenden Abstand 36 so gewählt, dass sie gemeinsam mit den Geraden 18 und 20 ebenfalls den Schnittpunkt 22 schneidet. Die über den Toleranzbereich 28 aus der Gerade 32 abgeleitete Gerade 34 schneidet die Gerade 18 dagegen in einem Schnittpunkt 38. An der senkrechten Achse 16 ist abzulesen, dass bei einem angenommen gleichen Toleranzbereich 28 eine mit einer Bohrung 46 ausgeführte Welle 12 nachfolgend zu kleineren Toleranzen 40 in der resultierenden Pressung führt, als eine Welle 12 ohne eine solche Bohrung 46 (Toleranz 42).

Figur 2 zeigt, wie gesagt, eine erste Ausführung des Pressverbundes 8 aus Welle 12 und Zahnrad 14 in einer teilweisen Schnittdarstellung. Die Verbindung ist vorliegend so ausgeführt, dass ein Endbereich 35 der Welle 12 in etwa bündig mit dem aufgepressten Zahnrad 14 abschließt. Das Zahnrad 14 weist eine gegenüber einer Zahnradhöhe 48 verminderte Presslänge 50 auf. Dadurch wird eine verbesserte Radiallagerung der Welle 12 ermöglicht, die in das Zahnrad 14 hineinragen kann. Die verminderte Presslänge 50 ist dennoch unkritisch wegen der aus der Figur 1 bekannten günstigeren Toleranz 40 für die resultierende Pressung. Ergänzend dargestellt ist ein Radiallager 51 als Teil eines nicht näher erläuterten Zahnradpumpengehäuses.

Figur 3 zeigt eine zweite Ausführung eines Pressverbundes von einer Welle 12 und einem Zahnrad 14 in einer teilweisen Schnittdarstellung. Dabei ist die Welle 12 insgesamt als Hohlwelle ausgeführt. Hierdurch wird Gewicht gespart und die Fertigung vereinfacht.

## Patentansprüche

1. Pressverbund (8) einer Welle (12) mit einem darauf gepressten Antriebselement (14) oder Abtriebselement, **dadurch gekennzeichnet, dass** die Welle (12) mindestens in jenem axialen Längenbereich (50), in dem das Antriebselement (14) oder Abtriebselement auf die Welle (12) gepresst ist wenigstens bereichsweise eine sich axial erstreckende Ausnehmung (46) aufweist, durch die sie dort als Hohlwelle ausgebildet ist, **dadurch gekennzeichnet, dass** die Welle (12) im Bereich des Antriebselements (14) oder Abtriebselements ein Radiallager (51) aufweist, welches sich über einen Teil der axialen Erstreckung des Antriebselements (14) oder Abtriebselements und zwischen Antriebselement (14) oder Abtriebselement und Welle (12) erstreckt.

2. Pressverbund (8) nach Anspruch 1, **dadurch gekennzeichnet, dass** der Längenbereich (50) in einem axialen Endbereich (35) der Welle (12) ist, und dass die Ausnehmung (46) sacklochartig ist.

3. Pressverbund (8) nach Anspruch 1, **dadurch gekennzeichnet, dass** die Welle (12) insgesamt eine Hohlwelle ist.

4. Pressverbund (8) nach einem der vorhergehenden Ansprüche, **dadurch gekennzeichnet, dass** das Antriebselement oder Abtriebselement ein Zahnrad (14) ist.

5. Pressverbund (8) nach Anspruch 4, **dadurch gekennzeichnet, dass** das Antriebselement oder Abtriebselement ein Zahnrad (14) einer Zahnradpumpe ist.

## Claims

1. Press-fit connection (8) of a shaft (12) to a drive input element (14) or drive output element pressed thereon, **characterized in that** the shaft (12), at least **in that** axial length region (50) in which the drive input element (14) or drive output element is pressed onto the shaft (12), has an axially extending recess (46) at least in regions, owing to which recess the shaft is formed there as a hollow shaft, **characterized in that** the shaft (12) has, in the region of the drive input element (14) or drive output element, a radial bearing (51) which extends over a part of the axial extent of the drive input element (14) or drive output element and between the drive input element (14) or drive output element and shaft (12).

2. Press-fit connection (8) according to Claim 1, **characterized in that** the length region (50) is in an axial end region (35) of the shaft (12), and **in that** the recess (46) is in the form of a blind hole.

3. Press-fit connection (8) according to Claim 1, **characterized in that** the shaft (12) is, overall, a hollow shaft.

4. Press-fit connection (8) according to one of the preceding claims, **characterized in that** the drive input element or drive output element is a gearwheel (14).

5. Press-fit connection (8) according to Claim 4, **characterized in that** the drive input element or drive output element is a gearwheel (14) of a gearwheel pump.

## Revendications

1. Assemblage par serrage (8) d'un arbre (12) à un élément d'entraînement (14) ou un élément de sortie serré sur celui-ci, **caractérisé en ce que** l'arbre (12), au moins dans la région longitudinale axiale (50) dans laquelle l'élément d'entraînement (14) ou l'élément de sortie est serré sur l'arbre (12), présente au moins en partie un évidement (46) s'étendant axialement, par lequel il est réalisé à cet endroit sous forme d'arbre creux, **caractérisé en ce que** l'arbre (12), dans la région de l'élément d'entraînement (14) ou de l'élément de sortie, présente un palier radial (51) qui s'étend sur une partie de l'étendue axiale de l'élément d'entraînement (14) ou de l'élément de sortie et entre l'élément d'entraînement (14) ou l'élément de sortie et l'arbre (12).

2. Assemblage par serrage (8) selon la revendication 1, **caractérisé en ce que** la région longitudinale (50) est dans une région d'extrémité axiale (35) de l'arbre (12), et **en ce que** l'évidement (46) est en forme de trou borgne.

3. Assemblage par serrage (8) selon la revendication 1, **caractérisé en ce que** l'arbre (12) est dans l'ensemble un arbre creux.

4. Assemblage par serrage (8) selon l'une quelconque des revendications précédentes, **caractérisé en ce que** l'élément d'entraînement ou l'élément de sortie est une roue dentée (14).

5. Assemblage par serrage (8) selon la revendication 4, **caractérisé en ce que** l'élément d'entraînement ou l'élément de sortie est une roue dentée (14) d'une pompe à roue dentée.
